(19) Europäisches Patentamt
European Patent Office
Office européen des brevets

(11) Numéro de publication: **0 484 196 B1**

(12) **FASCICULE DE BREVET EUROPEEN**

(45) Date de publication de fascicule du brevet: **21.06.95**

(51) Int. Cl.[6]: **D06M 13/288**, C07F 9/38

(21) Numéro de dépôt: **91402782.6**

(22) Date de dépôt: **18.10.91**

# (54) Nouveaux dérivés d'acides phosphono alkanepolycarboxyliques et leurs utilisations.

(30) Priorité: **30.10.90 FR 9013456**

(43) Date de publication de la demande:
**06.05.92 Bulletin 92/19**

(45) Mention de la délivrance du brevet:
**21.06.95 Bulletin 95/25**

(84) Etats contractants désignés:
**AT BE CH DE DK ES FR GB GR IT LI LU NL SE**

(56) Documents cités:
**FR-A- 2 180 101**
**US-A- 3 300 337**

(73) Titulaire: **SOCIETE FRANCAISE HOECHST**
**TOUR ROUSSEL HOECHST**
**1 Terrasse Bellini**
**F-92800 Puteaux (FR)**

(72) Inventeur: **Wilhelm, Didier**
**26, rue Diderot**
**F-92130 Issy les Moulineaux (FR)**
Inventeur: **Fietier, Isabelle**
**5, avenue du 25 Août 1944**
**F-94600 Choisy le Roi (FR)**

(74) Mandataire: **Rinuy, Santarelli**
**14, avenue de la Grande Armée**
**F-75017 Paris (FR)**

**EP 0 484 196 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne l'application de dérivés d'acides alkanepolycarboxyliques comme agents de réticulation de la cellulose, des nouveaux dérivés et des apprêts textiles.

FR-A-2 180 101 décrit des acides alkanepolycarboxyliques substitués par un ou plusieurs groupe phosphono utilisés à la dose de 1 à 6 moles pour 2000 ions-grammes de métal à complexer et dans des bains de lavage, utilisés en raison de leur propriété de complexation des cations métalliques pour éliminer les sels alcalins, réduire le taux de cendre de étoffes, comme fixateur des cations métalliques et comme adoucissant d'eau de lavage dans l'industrie textile.

US-A-3 300 337 décrit l'utilisation de phosphonopropanoate d'alcoyle ou des bis-phosphonopropanoate d'alcoylène comme agent anti-statique et/ou mouillant pour fibres textiles.

Les agents de réticulation de la cellulose les plus couramment utilisés pour conférer aux tissus cellulosiques des propriétés d'infroissabilité sont les produits d'addition du formaldéhyde avec divers amides tels que l'urée, la dihydroxy-4-5 éthylèneurée, l'éthylèneurée, éventuellement éthérifiées par du méthanol à l'état de dérivés N-méthylol ou N-méthylolamide tels que la diméthylol-1,3 dihydroxy-4-5 éthylèneurée (DMDHEU). Toutefois, ces apprêts libèrent du formaldéhyde non seulement lors de leur application sur les tissus cellulosiques mais également lors du stockage et de l'utilisation de ces tissus. Pour tenter de remédier à cet inconvénient, on a proposé de réticuler la cellulose avec, soit des acides polycarboxyliques libres ou salifiés, éventuellement en présence d'un catalyseur de réticulation choisi dans le groupe constitué par les sels de métal alcalin des acides phosphinique, phosphonique, phosphorique ou polyphosphorique (Gagliardi et Shippee, American dyestuff reporter, 52, p 300 - p 303, (1963) et Rowland et al, Textile Research Journal, 37, 933-941, (1967), 38, 634-643, (1968), brevets des Etats Unis d'Amérique N° 3526048 et 4820307), soit des acides polyphosphoniques en présence de cyanamide (J. TURNER, Text. Res. J., 49, 244, (1979)).
Toutefois, ces agents de réticulation ne donnent pas entière satisfaction, certains sont onéreux et peu solubles dans l'eau, d'autres fournissent des apprêts s'éliminant aisément aux lavages ménagers.

Afin de remédier à ces inconvénients, la demanderesse a découvert avec étonnement que des dérivés d'acides alkanepolycarboxyliques étaient de remarquables agents de réticulation de la cellulose conférant aux tissus cellulosiques d'excellentes propriétés d'infroissabilité associées à une bonne permanence aux lavages, tout en n'altérant pas les couleurs.

C'est pourquoi la présente invention a pour objet l'utilisation à titre d'agent de réticulation de la cellulose dans des apprêts textiles des dérivés des acides alkanepolycarboxylique répondant à la formule générale I :

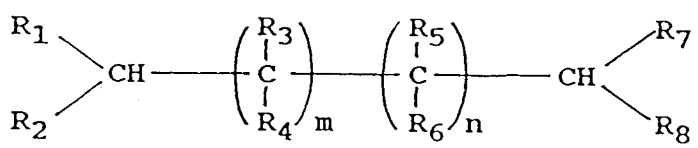

I

dans laquelle :

- n et m, identiques ou différents, sont égaux à 0 ou 1,
- $R_1$, $R_3$, $R_5$ et $R_7$ représentent un atome d'hydrogène ou un groupement carboxyle, étant entendu qu'au moins deux substituants parmi lesdits substituants $R_1$, $R_3$, $R_5$ et $R_7$ représentent un groupement carboxyle,
- $R_2$, $R_4$, $R_6$ et $R_8$ représentent un atome d'hydrogène ou un groupement - PO(OH)(OR) où R est un atome d'hydrogène ou un groupement alkyle en $C_1$-$C_4$, étant entendu qu'un seul substituant parmi lesdits substituants $R_2$, $R_4$, $R_6$ et $R_8$ représente ledit groupement - PO(OH)(OR).

Le groupement alkyle en $C_1$-$C_4$ peut être par exemple un radical méthyle, éthyle, n-propyle, n-butyle, ou méthyl-2 propyle, de préférence méthyle ou éthyle.

Parmi les acides alkanepolycarboxyliques, ci-dessus, on retient plus particulièrement les acides suivants :

1. acide phosphonosuccinique,
2. acide phosphono-1 propanedicarboxylique-1.3,
3. acide phosphono-2 propanedicarboxylique-1.3,
4. acide phosphono-1 propanedicarboxylique-1.2,
5. acide phosphono-2 propanedicarboxylique-1.2,
6. acide phosphono-3 propanedicarboxylique-1.2,

7. acide phosphono-1 tricarballylique,
8. acide phosphono-2 tricarballylique,
9. acide phosphono-1 butanedicarboxylique-1.2,
10.acide phosphono-2 butanedicarboxylique-1.2,
11.acide phosphono-3 butanedicarboxylique-1.2,
12.acide phosphono-4 butanedicarboxylique-1.2,
13.acide phosphono-1 butanedicarboxylique-1.3,
14.acide phosphono-2 butanedicarboxylique-1.3,
15.acide phosphono-3 butanedicarboxylique-1.3,
16.acide phosphono-4 butanedicarboxylique-1.3,
17.acide phosphono-1 butanedicarboxylique-1.4,
18.acide phosphono-2 butanedicarboxylique-1.4,
19.acide phosphono-2 butanedicarboxylique-2.3,
20.acide phosphono-1 butanetricarboxylique-1.2.3,
21.acide phosphono-2 butanetricarboxylique-1.2.3,
22.acide phosphono-3 butanetricarboxylique-1.2.3,
23.acide phosphono-4 butanetricarboxylique-1.2.3,
24.acide phosphono-1 butanetricarboxylique-1.2.4,
25.acide phosphono-2 butanetricarboxylique-1.2.4,
26.acide phosphono-3 butanetricarboxylique-1.2.4,
27.acide phosphono-4 butanetricarboxylique-1.2.4,
28.acide phosphono-1 butanetétracarboxylique-1.2.3.4,
29.acide phosphono-2 butanetétracarboxylique-1.2.3.4,
30. acide éthoxyhydroxyphosphorylsuccinique.

Parmi les acides selon la présente invention, on peut utiliser notamment :

- l'acide phosphonosuccinique,
- un acide phosphonotricarballilique,
- un acide phosphonopropanedicarboxylique,
- un acide phosphonopropanetricarboxylique,
- un acide phosphonobutanedicarboxylique,
- un acide phosphonobutanetricarboxylique,
- un acide phosphonobutanetétracarboxylique,
- l'acide phosphono-1 propanedicarboxylique-1.3,
- un acide phosphonobutanetricarboxylique-1.2.4,
- l'acide phosphono-2 butanetétracarboxylique-1.2.3.4,
- l'acide éthoxyhydroxyphosphoryl succinique.

Les acides alkanepolycarboxyliques utilisables selon la présente invention sont généralement décrits et ils peuvent être obtenus à partir de produits commerciaux par des procédés connus tels ceux cités par exemple dans "HOUBEN-WEYL, Methoden Der Organischen Chemie, Volume 12, tome I, pages 348-350, Goerg Thieme Verlag, Stuttgart, 1963 et dans le supplément E2 pages 300-486". La plupart de ces acides sont préparés par hydrolyse acide du polyester correspondant obtenu le plus souvent par réaction selon Michael du triéthylphosphite sur l'alcènepolycarboxylate d'éthyle correspondant.

Les acides alkanepolycarboxyliques répondant à la formule I, désignés par la suite produits selon l'invention, présentent d'intéressantes propriétés applicatives dans l'ennoblissement des fibres cellulosiques, notamment pour leur conférer de l'infroissabilité. Ils conviennent pour les tissus cellulosiques, tissé ou non tissés, comprenant 100% de produit cellulosique comme par exemple le coton, aussi bien que pour des mélanges, par exemple polyester-coton ou polyester-rayonne. De tels mélanges renferment de préférence, mais non obligatoirement, au moins 20% de cellulose. On peut traiter efficacement, avec les produits selon l'invention, aussi bien le blanc que les couleurs (impression, teintures, teintures à l'état de fil, "cross-dyed" et similaires). On peut également traiter des substances contenant des fibres à groupements hydroxyle libres.

L'application des produits selon l'invention à la substance à traiter s'opère généralement, mais non obligatoirement, en présence d'un catalyseur. Conviennent notamment des acides tels que acide chlorhydrique, sulfurique, fluoroborique, phosphorique, phosphoreux, hypophosphoreux, glycolique, maléique, lactique, citrique, tartrique, et oxalique ; des sels métalliques comme chlorure, nitrate, fluoroborate ou fluorosilicate de magnésium ou de zinc, chlorure d'ammonium, oxychlorure de zirconium, bisulfate de sodium ou de potassium, phosphite ou hypophosphite de sodium ou de potassium, dihydrogènophosphate de sodium ou de potassium, hydrogènophosphate disodique ou dipotassique; des chlorhydrates d'amine,

comme le chlorhydrate d'amino-2 méthyl-2 propanol et des produits similaires, ainsi que leurs mélanges. Lorsqu'on utilise un catalyseur, la quantité mise en oeuvre représente en général entre 0,01 et 10 %, de préférence entre 0,05 et 5 % du poids du bain d'imprégnation.

Les produits selon l'invention peuvent être appliqués à la matière textile par tout procédé connu et approprié, par exemple par immersion ou imprégnation. On peut incorporer en quantités appropriées, dans ces bains de traitement, des additifs classiques comme mouillants, lubrifiants, plastifiants, agents donnant du corps, produits hydrofuges, retardateurs de flamme, agents antisalissure, inhibiteurs de moisissures, agents de coloration fluorescente et similaires. Toutefois, ces produits auxiliaires ne doivent pas interférer avec le fonctionnement propre des produits selon l'invention, ne doivent pas exercer eux-mêmes un effet nocif sur la matière à traiter et il est souhaitable qu'ils soient exempts de formaldéhyde.

La quantité de produit à appliquer sur la substance textile dépend du type de cette substance et du but poursuivi. Généralement, elle est de l'ordre de 0.5 à 10 %, de préférence comprise entre 2 et 5 %, rapporté au poids de textile.

Au cours du procédé de traitement des textiles avec les produits selon invention, le textile est par exemple imprégné avec une solution aqueuse des produits de l'invention contenant éventuellement le catalyseur de réticulation choisi, puis le textile ainsi imprégné est séché et ensuite il est soumis à un traitement thermique classique afin de réaliser la réticulation. Habituellement ce traitement thermique est effectué à une température supérieure à 125 ° C, avantageusement à une température supérieure à 150 ° C.

Les stades de séchage et de réticulation peuvent être consécutifs ou simultanés. Eventuellement, la substance textile peut être finie par post-réticulation classique (également dénommée réticulation différée ou à retardement).

Certains des acides utilisables selon la présente invention sont des produits nouveaux. Ils peuvent alors être préparés comme suit :

L'acide 10 peut être obtenu par hydrolyse acide du produit de condensation d'un halogénure d'alkyle, notamment de l'iodure d'éthyle, sur le diéthophosphorylsuccinate de diéthyle. De même, l'acide 15 peut être obtenu par hydrolyse acide du produit de condensation de l'iodure de méthyle sur le dimèthoxyphosphoryl-2 glutarate de diméthyle. On peut accéder à l'acide 9 par condensation de l'alphabromobutyrate d'éthyle avec le diéthylphosphoryl-acétate d'éthyle suivie d'une hydrolyse acide.

L'acide 27 peut être préparé par hydrolyse acide du produit de condensation du phosphite de triéthyle avec le butène-2 tricarboxylate d'éthyle-1.2.4. En condensant le diéthoxyphosphorylacétate d'éthyle avec le mésaconate de diéthyle puis en hydrolysant l'ester obtenu, on peut accéder à l'acide 20. L'acide 28 peut être obtenu par hydrolyse acide du produit de condensation du diéthoxyphosphorylacétate d'éthyle avec l'alphabromotricarballylate d'éthyle. L'acide 12 peut être obtenu par hydrolyse acide du produit de condensation du bromoacétate de méthyle avec le diméthoxy phosphoryl-4 butanoate de méthyle. Quant à l'acide 14, il peut être préparé par hydrolyse acide du produit de condensation de l'iodure de méthyle avec le diméthoxyphosphoryl -3 glutarate de diméthyle.

Les acides mono(alcoxyhydroxyphosphoryl)alkanepolycarboxyliques selon l'invention peuvent être préparés par hydrolyse ménagée des mono(dialcoxyphosphoryl)alkanepolycarboxylates d'alkyle correspondants. En effet, il est connu que l'hydrolyse acide d'un acide mono(alcoxyhydroxyphosphoryl)alkanepolycarboxylique en acide monophosphonoalkanepolycarboxylique correspondant demande des conditions beaucoup plus drastiques que celles utilisées pour transformer un mono(dialcoxyphosphoryl)alkanepolycarboxylate d'alkyle en acide mono(alcoxyhydroxyphosphoryl)-alkanepolycarboxylique (cf. par exemple, l'hydrolyse acide du diéthoxyphosphorylacétate d'éthyle en acide éthoxyhydroxyphosphorylacétique, P. Nylèn, Ber., 59, 1119-1128 (1926). Des exemples de telles préparations figurent ci-après dans la partie expérimentale. La présente demande a donc également pour objet les dérivés répondant à la formule I :

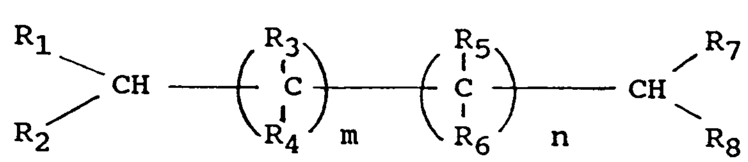

Dans laquelle m = 1, n = 1, $R_2$, $R_4$, $R_6$ et $R_8$ représentent un atome d'hydrogène ou un groupement - PO(OH) (OR) où R représente un atome d'hydrogène ou un groupement alkyle en $C_1$-$C_4$, $R_1$ représente un groupement carboxyle et :

- soit, $R_2$ représente un groupement $PO_3H_2$, $R_3$ un groupement COOH et $R_4$, $R_5$, $R_6$, $R_7$ et $R_8$ représentent un atome d'hydrogène,

- soit, $R_3$ représente un groupement COOH, $R_4$ un groupement $PO_3H_2$ et $R_2$, $R_5$, $R_6$, $R_7$ et $R_8$ représentent un atome d'hydrogène,
- soit, $R_3$ représente un groupement COOH, $R_8$ un groupement $PO_3H_2$ et $R_2$, $R_4$, $R_5$, $R_6$ et $R_7$ représentent un atome d'hydrogène,
- soit, $R_5$ représente un groupement COOH, $R_4$ un groupement $PO_3H_2$ et $R_2$, $R_3$, $R_6$ , $R_7$ et $R_8$ représentent un atome d'hydrogène,
- soit, $R_5$ représente un groupement COOH, $R_6$ un groupement $PO_3H_2$ et $R_2$, $R_3$, $R_4$ , $R_7$ et $R_8$ représentent un atome d'hydrogène,
- soit, $R_3$ et $R_5$ représentent un groupement COOH, $R_2$ un groupement $PO_3H_2$ et $R_4$, $R_6$, $R_7$ et $R_8$ représentent un atome d'hydrogène,
- soit, $R_3$ et $R_7$ représentent un groupement COOH, $R_8$ un groupement $PO_3H_2$ et $R_2$, $R_4$, $R_5$ et $R_6$ représentent un atome d'hydrogène,
- soit, $R_3$ , $R_5$ et $R_7$ représentent un groupement COOH, $R_2$ un groupement $PO_3H_2$ et $R_4$, $R_6$ et $R_8$ représentent un atome d'hydrogène.

La présente invention a aussi pour objet les apprêts textiles caractérisés en ce qu'ils renferment à titre de principe actif de 0,5% à 10%, rapporté au poids de textile, d'un agent de réticulation de la cellulose qui est un dérivé d'acide alkanepolycarboxylique répondant à la formule I.
Dans des conditions préférentielles, les apprêts ci-dessus décrits sont caractérisés en ce qu'ils renferment un autre catalyseur, celui-ci pouvant être choisi parmi les sels de métal alcalin des acides hypophosphoreux, phosphoreux ou hypophosphorique. On retient également les apprêts caractérisés en ce qu'ils ne renferment pas de catalyseur.

Les exemples suivants sont donnés à titre indicatifs ; ils permettent de mieux comprendre l'invention mais ils n'en limitent pas la portée. Sauf indications contraires, les parties et pourcentages sont donnés en poids. Le test de défroissabilité est réalisé selon la norme AATCC 66-1972 sur des échantillons tels quels et sur des échantillons soumis à trois lavages ménagers à 60 °C ; la défroissabilité est exprimée par la somme des angles de défroissement obtenus en sens chaîne et en sens trame. La résistance à la traction des échantillons, exprimée en daN en sens chaîne plus en sens trame est réalisée selon la norme AFNOR G 07.001. Le jaunissement des tissus, réalisé sur un appareil FIXOTEST à 200 °C pendant 30 secondes et les blancheurs, exprimées en degrés Berger, sont mesurés avec un spectrophotomètre. Le taux de formaldéhyde résiduel sur tissu déterminé selon la méthode décrite dans la loi japonaise 112-1973 est égal à zéro pour tous les exemples.

## EXEMPLE 1

Dans un mélange de 79,07 g (0,5 mole) d'itaconate de diméthyle et de 55 g (0,5 mole) de diméthylphosphite, on introduit lentement sous agitation en maintenant la température du mélange à 10 + 2 °C, 0,7 g (13 mmoles) de méthylate de sodium en branche. Puis, lorsque la réaction exothermique est terminée, on abandonne le milieu réactionnel 16 heures à la température ambiante, on le neutralise ensuite avec de l'acide sulfurique concentré et enfin, on le soumet à une distillation sous pression réduite à 0,3 mbar. On isole ainsi 112 g de diméthoxyphosphoryl-3 propanedicarboxylate de diméthyl-1-2 distillant à 150 °C sous 0,3 mbar. Cet ester est hydrolisé de suite en acide phosphono-3 propanedicarboxylique-1-2 selon un procédé similaire à celui décrit à l'exemple 3.

## EXEMPLE 2

Dans un mélange de 491,7 g (2,7 moles) de diméthoxyphosphorylacétate de méthyle et de 292,3 g (1,85 moles) d'itaconate de diméthyle, on introduit en 30 minutes, sous agitation, en laissant se développer la réaction exothermique, 5 g (93 mmoles) de méthylate de sodium, la température atteint 60 °C. Le milieu réactionnel est ensuite abandonné 22 heures sous agitation à 60 °C avant d'être neutralisé à la température ambiante avec de l'acide sulfurique concentré, puis il est filtré pour éliminer des sels minéraux insolubles, et enfin il est soumis à une distillation sous pression réduite. On isole ainsi 470 g de diméthoxyphosphoryl-4 butanetricarboxylate de diméthyle-1,2,4 distillant à 180 °C sous 0,2 mbar.

## EXEMPLE 3

On chauffe 1 heure à 130 °C 381,1 g (1,12 mole) de diméthoxyphosphoryl-4 butanetricarboxylate de triméthyl-1,2,4 préparé à l'exemple 2 avec 3,3 g (34 mmoles) d'acide sulfurique concentré et 69 g (1,5 mole) d'acide formique. On élimine ensuite par distillation le formiate d'éthyle formé tout en introduisant

dans le milieu réactionnel en 22 heures, 400 g d'acide formique. Lorsqu'on ne recueille plus de formiate d'éthyle, le milieu réactionnel est refroidi à la température ambiante, l'acide cherché cristallise spontanément. On isole par filtration et on recristallise par chaud et froid dans l'acide formique. On isole ainsi 176,5 g (0,65 mole) d'acide phosphono-4 butanetricarboxylique-1,2,4 critallisé présentant un point de fusion de 182 ° C.

EXEMPLES 4 - 29

On imprègne au foulard un tissu de popeline 100 % coton, débouilli et blanchi, d'un poids d'environ 130 g par mètre carré avec un taux d'exprimage de 75 % dans un bain aqueux dont le pH a été ajusté avec de la soude à la valeur indiquée dans les tableaux I, II et III contenant en solution les quantités d'acide et éventuellement de catalyseur mentionnées dans ces tableaux, ainsi que 2 g par litre de nonylphénol éthoxylé avec 10 moles d'oxyde d'éthylène. Le tissu est ensuite séché pendant 45 secondes à 120 ° C, puis il est soumis sur une rame de laboratoire à un traitement thermique de 90 secondes à 180 ° C.

On détermine ensuite sur des échantillons du tissu traité :

- la défroissabilité sur des échantillons tels quels et sur des échantillons soumis à trois lavages ménagers à 60 ° C,
- la résistance à la traction, désignée Rt,
- la blancheur,
- le jaunissement,

les résultats obtenus sont donnés dans les tableaux I, II et III.
On constate que les produits selon la présente invention améliorent considérablement les qualités d'infroissabilité des tissus traités même après lavage, sans pour autant baisser trop nettement leur résistance à la traction.

Les nouveaux dérivés acides de formule I peuvent être préparés par hydrolyse d'un ester correspondant pour obtenir l'acide libre désiré.

**NOTES RELATIVES AUX TABLEAUX I,II ET III**

Les abréviations utilisées dans ces tableaux ont la signification suivante :

- Qté : quantité de produit dissous dans le bain d'imprégnation, exprimée en gramme par litre.
- A : acide succinique.
- B : acide tricarballylique, produit commercial.
- C : acide butanetétracarboxylique-1,2,3,4 produit commercial.
- $C_1$ : hypophosphite de sodium anhydre.
- $C_2$ : hydrogènophosphate de disodium cristallisé avec 12 molécules d'eau.
- Rt : résistance à la traction.
- $B_1$ : blancheur exprimée en degré Berger.

- Ja : jaunissement.

## TABLEAU I

| EXEMPLES | Acide nature | Acide Qté | Catalyseur nature | Catalyseur qté | pH du bain | Défroissabilité tel quel | Défroissabilité après 3 lavages | Rt | Bl. | Ja. |
|---|---|---|---|---|---|---|---|---|---|---|
| 4 | A | 40 | | 0 | 2,3 | 198 | 189,5 | 60 | 65,5 | 50,8 |
| 5 | A | 40 | $C_1$ | 30 | 2,3 | 219 | 199,7 | 80 | 75 | 66,6 |
| 6 | 1 | 68 | | 0 | 2,3 | 254,7 | 218,2 | 64 | 67,7 | 54,4 |
| 7 | 1 | 68 | $C_1$ | 30 | 2,3 | 262,5 | 238 | 64 | 75,1 | 64,1 |
| 8 | 1 | 68 | $C_2$ | 30 | 2,3 | 259,2 | 234 | 53 | 64,9 | 38,6 |
| 9 | 2 | 72 | | 0 | 2,3 | 213,5 | 209 | 55 | 51,6 | 33,6 |
| 10 | 2 | 72 | $C_1$ | 30 | 2,4 | 258 | 226 | 84,2 | 74,4 | 64,1 |
| 11 | 30 | 77 | | 0 | 2,5 | 244 | 228 | 75,3 | 69,2 | 60,0 |
| 12 | 30 | 77 | $C_1$ | 30 | 2,5 | 252 | 225,5 | 74,3 | 75,3 | 69,7 |
| 13 | 0 | 0 | | 0 | | 188 | 183,5 | 116,4 | 78 | 76 |

# TABLEAU II

| EXEMPLES | Acide | | Catalyseur | | pH du bain | Défroissabilité | | Rt | Bl. | Ja. |
|---|---|---|---|---|---|---|---|---|---|---|
| | nature | Qté | nature | qté | | tel quel | après 3 lavages | | | |
| 14 | B | 40 | | 0 | 2,2 | 194,5 | 203 | 58,7 | 63,8 | 57,1 |
| 15 | B | 40 | $C_1$ | 30 | 2,4 | 275 | 247 | 67 | 73,2 | 66,4 |
| 16 | 7 | 58,5 | | 0 | 2,3 | 253 | 245,7 | 62,3 | 71,3 | 61,3 |
| 17 | 7 | 58,5 | $C_1$ | 30 | 2,3 | 271 | 246 | 66 | 75 | 69,2 |
| 18 | 8 | 58,5 | | 0 | 2,3 | 258 | 241 | 64 | 66,6 | 51 |
| 19 | 8 | 58,5 | $C_1$ | 30 | 2,3 | 282,2 | 250,7 | 63,3 | 72,8 | 64,4 |
| 20 | 25 | 62 | | 0 | 2,9 | 246 | 221 | 78,1 | 72,5 | 67 |
| 21 | 25 | 62 | $C_1$ | 30 | 2,5 | 259,3 | 232,5 | 70,7 | 75,1 | 71,3 |
| 22 | 27 | 62 | | 0 | 2,3 | 214,2 | 218,7 | 69,1 | 63,2 | 48,8 |
| 23 | 27 | 62 | $C_1$ | 12 | 2,3 | 246,5 | 225,8 | 68,7 | 73,3 | 65,2 |
| 24 | 27 | 62 | $C_1$ | 30 | 2,3 | 244,5 | 239 | 70,6 | 74,6 | 68,3 |
| 28 | | 0 | | 0 | | 166,2 | 186,7 | 118,1 | 76,8 | 74,4 |

## TABLEAU III

| EXEMPLES | Acide nature | Acide Qté | Catalyseur nature | Catalyseur qté | pH du bain | Défroissabilité tel quel | Défroissabilité après 3 lavages | Rt | Bl. | Ja. |
|---|---|---|---|---|---|---|---|---|---|---|
| 25 | C | 40 | $C_1$ | 30 | 2,3 | 269,5 | 257,5 | 64,3 | 74,3 | 70,6 |
| 26 | 29 | 53,5 | | 0 | 2,3 | 235,7 | 212,5 | 62,3 | 70,7 | 60,5 |
| 27 | 29 | 53,5 | $C_1$ | 30 | 2,3 | 257,5 | 235,5 | 65 | 75,2 | 68,8 |
| 28 | | 0 | | 0 | | 166,2 | 186,7 | 118,1 | 76,8 | 74,4 |

## Revendications

1. Utilisation à titre d'agent de réticulation de la cellulose dans des apprêts textiles, des dérivés des acides alkanepolycarboxyliques répondant à la formule générale I :

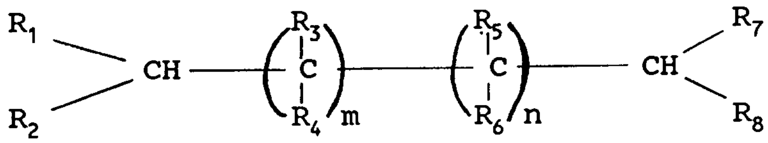

I

dans laquelle :

- n et m, identiques ou différents, sont égaux à 0 ou 1,
- $R_1$, $R_3$, $R_5$ et $R_7$ représentent un atome d'hydrogène ou un groupement carboxyle, étant entendu qu'au moins deux substituants parmi lesdits substituants $R_1$, $R_3$, $R_5$ et $R_7$ représentent un groupement carboxyle,
- $R_2$, $R_4$, $R_6$ et $R_8$ représentent un atome d'hydrogène ou un groupement - PO(OH)(OR) où R est un atome d'hydrogène ou un groupement alkyle en $C_1$-$C_4$, étant entendu qu'un seul substituant parmi lesdits substituants $R_2$, $R_4$, $R_6$ et $R_8$ représente ledit groupement - PO(OH)(OR).

**2.** Utilisation selon la revendication 1, caractérisée en ce que le dérivé de formule I est l'acide phosphonosuccinique.

**3.** Utilisation selon la revendication 1, caractérisée en ce que le dérivé de formule I est un acide phosphonotricarballylique.

**4.** Utilisation selon la revendication 1, caractérisée en ce que le dérivé de formule I est un acide phosphonopropanedicarboxylique.

**5.** Utilisation selon la revendication 1, caractérisée en ce que le dérivé de formule I est un acide phosphonopropanetricarboxylique.

**6.** Utilisation selon la revendication 1, caractérisée en ce que le dérivé de formule I est un acide phosphonobutanedicarboxylique.

**7.** Utilisation selon la revendication 1, caractérisée en ce que le dérivé de formule I est un acide phosphonobutanetricarboxylique.

**8.** Utilisation selon la revendication 1, caractérisée en ce que le dérivé de formule I est un acide phosphonobutanetétracarboxylique.

**9.** Utilisation selon la revendication 1, caractérisée en ce que le dérivé de formule I est l'acide phosphono-1 propanedicarboxylique-1,3.

**10.** Utilisation selon la revendication 1, caractérisée en ce que le dérivé de formule I est un acide phosphonobutanetricarboxylique-1,2,4.

**11.** Utilisation selon la revendication 1, caractérisée en ce que le dérivé de formule I est l'acide phosphono-2 butanetétracarboxylique-1,2,3,4.

**12.** Utilisation selon la revendication 1, caractérisée en ce que le dérivé de formule I est l'acide éthoxyhydroxyphosphoryl succinique.

**13.** Les dérivés répondant à la formule I :

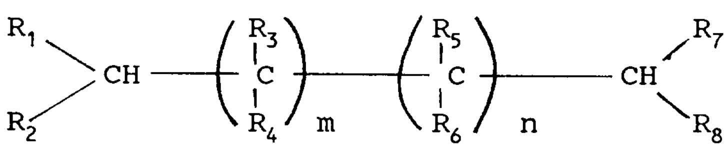

dans laquelle m = 1, n = 1, $R_2$, $R_4$, $R_6$ et $R_8$ représentent un atome d'hydrogène ou un groupement -PO(OH)(OR) où R représente un atome d'hydrogène ou un groupement alkyle en $C_1$-$C_4$, $R_1$ représente un groupement carboxyle et :

- soit, $R_2$ représente un groupement $PO_3H_2$, $R_3$ un groupement COOH et $R_4$, $R_5$, $R_6$, $R_7$ et $R_8$ représentent un atome d'hydrogène,
- soit, $R_3$ représente un groupement COOH, $R_4$ un groupement $PO_3H_2$ et $R_2$, $R_5$, $R_6$, $R_7$ et $R_8$ représentent un atome d'hydrogène,
- soit, $R_3$ représente un groupement COOH, $R_8$ un groupement $PO_3H_2$ et $R_2$, $R_4$, $R_5$, $R_6$ et $R_7$ représentent un atome d'hydrogène,
- soit, $R_5$ représente un groupement COOH, $R_4$ un groupement $PO_3H_2$ et $R_2$, $R_3$, $R_6$, $R_7$ et $R_8$ représentent un atome d'hydrogène,
- soit, $R_5$ représente un groupement COOH, $R_6$ un groupement $PO_3H_2$ et $R_2$, $R_3$, $R_4$, $R_7$ et $R_8$ représentent un atome d'hydrogène,
- soit, $R_3$ et $R_5$ représentent un groupement COOH, $R_2$ un groupement $PO_3H_2$ et $R_4$, $R_6$, $R_7$ et $R_8$ représentent un atome d'hydrogène,
- soit, $R_3$ et $R_7$ représentent un groupement COOH, $R_8$ un groupement $PO_3H_2$ et $R_2$, $R_4$, $R_5$ et $R_6$ représentent un atome d'hydrogène.
- soit, $R_3$, $R_5$ et $R_7$ représentent un groupement COOH, $R_2$ un groupement $PO_3H_2$ et $R_4$, $R_6$ et $R_8$ représentent un atome d'hydrogène.

**14.** Apprêts textiles caractérisés en ce qu'ils renferment à titre de principe actif de 0,5 à 10 %, rapporté au poids de textile, d'un agent de réticulation de la cellulose qui est un dérivé d'acide alkanepolycarboxylique répondant à la formule I :

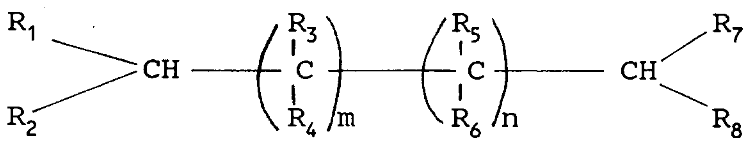

I

dans laquelle :

- n et m, identiques ou différents, sont égaux à 0 ou 1,
- $R_1$, $R_3$, $R_5$ et $R_7$ représentent un atome d'hydrogène ou un groupement carboxyle, étant entendu qu'au moins deux substituants parmi lesdits substituants $R_1$, $R_3$, $R_5$ et $R_7$ représentent un groupement carboxyle,
- $R_2$, $R_4$, $R_6$ et $R_8$ représentent un atome d'hydrogène ou un groupement - PO(OH)(OR) où R est un atome d'hydrogène ou un groupement alkyle en $C_1$-$C_4$, étant entendu qu'un seul substituant parmi lesdits substituants $R_2$, $R_4$, $R_6$ et $R_8$ représente ledit groupement - PO(OH)(OR).

**15.** Apprêts selon la revendication 14, caractérisés en ce qu'ils renferment en outre un catalyseur.

**16.** Apprêts selon la revendication 15, caractérisés en ce que le catalyseur est choisi parmi les sels de métal alcalin des acides hypophosphoreux, phosphoreux ou hypophosphorique.

**17.** Apprêts selon la revendication 14, caractérisés en ce qu'ils ne renferment pas de catalyseur.

**18.** Procédé de préparation des dérivés tels que définis à la revendication 13 caractérisé en ce que l'on hydrolyse un ester correspondant en l'acide libre désiré.

## Claims

**1.** Use as cellulose cross-linking agent in textile finishes of derivatives of alkanepolycarboxylic acids corresponding to general formula I:

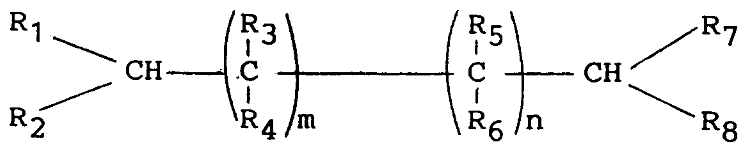

I

in which:

- n and m, identical or different, are equal to 0 or 1,
- $R_1$, $R_3$, $R_5$ and $R_7$ represent a hydrogen atom or a carboxyl group, it being understood that at least two substituents from said substituents $R_1$, $R_3$, $R_5$ and $R_7$ represent a carboxyl group,
- $R_2$, $R_4$, $R_6$ and $R_8$ represent a hydrogen atom or a -PO(OH)(OR) group where R is a hydrogen atom or a $C_1$-$C_4$ alkyl group, it being understood that only one substituent from the said substituents $R_2$, $R_4$, $R_6$ and $R_8$ represents said -PO)OH)(OR) group.

**2.** Use according to claim 1, characterized in that the derivative of formula I is phosphonosuccinic acid.

**3.** Use according to claim 1, characterized in that the derivative of formula I is a phosphonotricarballylic acid.

**4.** Use according to claim 1, characterized in that the derivative of formula I is a phosphonopropanedicarboxylic acid.

**5.** Use according to claim 1, characterized in that the derivative of formula I is a phosphonopropanetricarboxylic acid.

**6.** Use according to claim 1, characterized in that the derivative of formula I is a phosphonobutanedicarboxylic acid.

**7.** Use according to claim 1, characterized in that the derivative of formula I is a phosphonobutanetricarboxylic acid.

**8.** Use according to claim 1, characterized in that the derivative of formula I is a phosphonobutanetetracarboxylic acid.

**9.** Use according to claim 1, characterized in that the derivative of formula I is 1-phosphono 1,3-propanedicarboxylic acid.

**10.** Use according to claim 1, characterized in that the derivative of formula I is 1,2,4-phosphonobutanetricarboxylic acid.

**11.** Use according to claim 1, characterized in that the derivative of formula I is 2-phosphono 1,2,3,4-butanetetracarboxylic acid.

**12.** Use according to claim 1, characterized in that the derivative of formula I is ethoxyhydroxyphosphoryl succinic acid.

**13.** The derivatives corresponding to formula I:

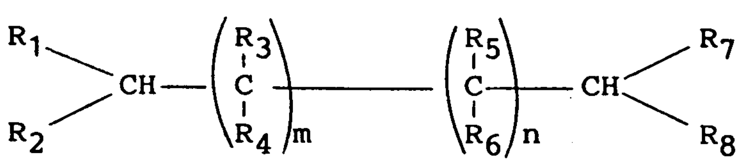

I

in which m = 1, n = 1, $R_2$, $R_4$, $R_6$ and $R_8$ represent a hydrogen atom or a -PO(OH)(OR) group where R represents a hydrogen atom or a $C_1$-$C_4$ alkyl group, $R_1$ represents a carboxyl group and:

- either, $R_2$ represents a $PO_3H_2$ group, $R_3$ a COOH group and $R_4$, $R_5$, $R_6$, $R_7$ and $R_8$ represent a hydrogen atom,
- or, $R_3$ represents a COOH group, $R_4$ a $PO_3H_2$ group and $R_2$, $R_5$, $R_6$, $R_7$ and $R_8$ represent a hydrogen atom,
- or, $R_3$ represents a COOH group, $R_8$ a $PO_3H_2$ group and $R_2$, $R_4$, $R_5$ $R_6$ and $R_7$ represent a hydrogen atom,
- or, $R_5$ represents a COOH group, $R_4$ a $PO_3H_2$ group and $R_2$, $R_3$, $R_6$, $R_7$ and $R_8$ represent a hydrogen atom,
- or, $R_5$ represents a COOH group, $R_6$ a $PO_3H_2$ group and $R_2$, $R_3$, $R_4$, $R_7$ and $R_8$ represent a hydrogen atom,
- or, $R_3$ and $R_5$ represent a COOH group, $R_2$ a $PO_3H_2$ group and $R_4$, $R_6$, $R_7$ and $R_8$ represent a hydrogen atom,
- or, $R_3$ and $R_7$ represent a COOH group, $R_8$ a $PO_3H_2$ group and $R_2$, $R_4$, $R_5$ and $R_6$ represent a hydrogen atom,
- or, $R_3$, $R_5$ and $R_7$ represent a COOH group, $R_2$ a $PO_3H_2$ group and $R_4$, $R_6$, and $R_8$ represent a hydrogen atom.

**14.** Textile finishes characterized in that they contain as active ingredient from 0.5 to 10% by weight of textile, a cross-linking agent of cellulose which is a derivative of alkanepolycarboxylic acid corresponding to formula I:

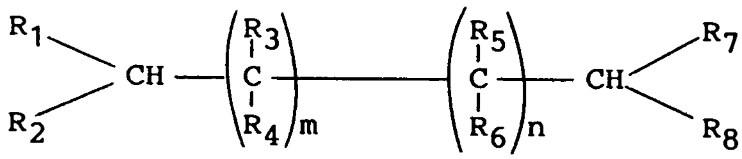

I

in which:
- n and m, identical or different, are equal to 0 or 1,
- $R_1$, $R_3$, $R_5$ and $R_7$ represent a hydrogen atom or a carboxyl group, it being understood that at least two of the substituents from the said substituents $R_1$, $R_3$, $R_5$ and $R_7$ represent a carboxyl group,
- $R_2$, $R_4$, $R_6$ and $R_8$ represent a hydrogen atom or a -PO(OH)(OR) group where R is a hydrogen atom or a $C_1$-$C_4$ alkyl group, it being understood that only one substituent from the said substituents $R_2$, $R_4$, $R_6$ and $R_8$ represents said -PO(OH)(OR) group.

**15.** Finishes according to claim 14, characterized in that in addition they contain a catalyst.

**16.** Finishes according to claim 15, characterized in that the catalyst is chosen from the alkali metal salts of hypophosphorous, phosphorous or hypophosphoric acids.

**17.** Finishes according to claim 14, characterized in that they do not contain a catalyst.

**18.** Process for the preparation of derivatives defined in claim 13, characterized in that a corresponding ester is hydrolyzed into the desired free acid.

**Patentansprüche**

**1.** Verwendung von Derivaten von Alkanpolycarbonsäuren entsprechend der allgemeinen Formel I

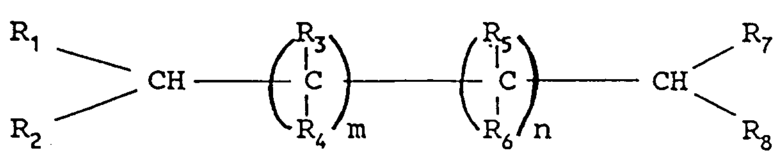

I

in welcher

- n und m gleich oder verschieden sind und 0 oder 1 sind,
- $R_1$, $R_3$, $R_5$ und $R_7$ ein Wasserstoffatom oder eine Carboxylgruppe bedeuten, wobei mindestens zwei Substituenten der Substituenten $R_1$, $R_3$, $R_5$ und $R_7$ eine Carboxylgruppe bedeuten,
- $R_2$, $R_4$, $R_6$ und $R_8$ jeweils ein Wasserstoffatom oder eine Gruppe -PO(OH)(OR) bedeuten, worin R ein Wasserstoffatom oder eine $C_1$-$C_4$-Alkylgruppe ist, wobei nur ein einziger Substituent der Substituenten $R_2$, $R_4$, $R_6$ und $R_8$ die Gruppe -PO(OH)(OR) ist, als Vernetzungsmittel für Cellulose in Textilappreturen.

**2.** Verwendung nach Anspruch 1, dadurch gekennzeichnet, daß das Derivat der Formel I Phosphonobernsteinsäure ist.

**3.** Verwendung nach Anspruch 1, dadurch gekennzeichnet, daß das Derivat der Formel I eine Phosphonotricarballylsäure ist.

**4.** Verwendung nach Anspruch 1, dadurch gekennzeichnet, daß das Derivat der Formel I eine Phosphonopropandicarbonsäure ist.

**5.** Verwendung nach Anspruch 1, dadurch gekennzeichnet, daß das Derivat der Formel I eine Phosphonopropantricarbonsäure ist.

**6.** Verwendung nach Anspruch 1, dadurch gekennzeichnet, daß das Derivat der Formel I eine Phosphonobutandicarbonsäure ist.

**7.** Verwendung nach Anspruch 1, dadurch gekennzeichnet, daß das Derivat der Formel I eine Phosphonobutantricarbonsäure ist.

**8.** Verwendung nach Anspruch 1, dadurch gekennzeichnet, daß das Derivat der Formel I eine Phosphonobutantetracarbonsäure ist.

**9.** Verwendung nach Anspruch 1, dadurch gekennzeichnet, daß das Derivat der Formel I 1-Phosphonopropan-1,3-dicarbonsäure ist.

**10.** Verwendung nach Anspruch 1, dadurch gekennzeichnet, daß das Derivat der Formel I eine Phosphonobutan-1,2,4-tricarbonsäure ist.

**11.** Verwendung nach Anspruch 1, dadurch gekennzeichnet, daß das Derivat der Formel I 2-Phosphonobutan-1,2,3,4-tetracarbonsäure ist.

**12.** Verwendung nach Anspruch 1, dadurch gekennzeichnet, daß das Derivat der Formel I Ethoxyhydroxyphosphorylbernsteinsäure ist.

**13.** Derivate der Formel I

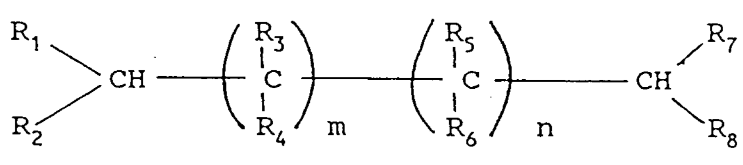

in welcher m = 1, n = 1, $R_2$, $R_4$, $R_6$ und $R_8$ ein Wasserstoffatom oder eine Gruppe -PO(OH)(OR) bedeuten, wobei R ein Wasserstoffatom oder eine $C_1$-$C_4$-Alkylgruppe ist, $R_1$ eine Carboxylgruppe ist und

- $R_2$ eine $PO_3H_2$-Gruppe ist, $R_3$ eine COOH-Gruppe ist und $R_4$, $R_5$, $R_6$, $R_7$ und $R_8$ jeweils ein Wasserstoffatom bedeuten,
- $R_3$ eine COOH-Gruppe ist, $R_4$ eine $PO_3H_2$-Gruppe ist und $R_2$, $R_5$, $R_6$, $R_7$ und $R_8$ jeweils ein Wasserstoffatom bedeuten,

- $R_3$ eine COOH-Gruppe ist, $R_8$ eine $PO_3H_2$-Gruppe ist und $R_2$, $R_4$, $R_5$, $R_6$ und $R_7$ jeweils ein Wasserstoffatom bedeuten,
- $R_5$ eine COOH-Gruppe ist, $R_4$ eine $PO_3H_2$-Gruppe ist und $R_2$, $R_3$, $R_6$, $R_7$ und $R_8$ jeweils ein Wasserstoffatom bedeuten,
- $R_5$ eine COOH-Gruppe ist, $R_6$ eine $PO_3H_2$-Gruppe ist und $R_2$, $R_3$, $R_4$, $R_7$ und $R_8$ jeweils ein Wasserstoffatom bedeuten,
- $R_3$ und $R_5$ jeweils eine COOH-Gruppe bedeuten, $R_2$ eine $PO_3H_2$-Gruppe ist und $R_4$, $R_6$, $R_7$ und $R_8$ jeweils ein Wasserstoffatom be-deuten,
- $R_3$ und $R_7$ jeweils eine COOH-Gruppe bedeuten, $R_8$ eine $PO_3H_2$-Gruppe ist und $R_2$, $R_4$, $R_5$ und $R_6$ jeweils ein Wasserstoffatom bedeuten,
- $R_3$, $R_5$ und $R_7$ jeweils eine COOH-Gruppe bedeuten, $R_2$ eine $PO_3H_2$-Gruppe ist und $R_4$, $R_6$ und $R_8$ jeweils ein Wasserstoffatom bedeuten.

**14.** Textilappreturen, dadurch gekennzeichnet, daß sie als Wirksubstanz 0,5 bis 10 %, bezogen auf das Gewicht des Textilmaterials, eines Vernetzungsmittels für Cellulose enthalten, das ein Derivat einer Alkanpolycarbonsäure entsprechend der Formel I ist:

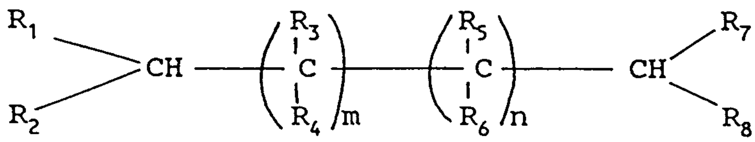

I

in welcher

- n und m gleich oder verschieden sind und 0 oder 1 sind,
- $R_1$, $R_3$, $R_5$ und $R_7$ ein Wasserstoffatom oder eine Carboxylgruppe bedeuten, wobei mindestens zwei Substituenten der Substituenten $R_1$, $R_3$, $R_5$ und $R_7$ eine Carboxylgruppe bedeuten,
- $R_2$, $R_4$, $R_6$ und $R_8$ jeweils ein Wasserstoffatom oder eine Gruppe -PO(OH)(OR) bedeuten, worin R ein Wasserstoffatom oder eine $C_1$-$C_4$-Alkylgruppe ist, wobei nur ein einziger Substituent der Substituenten $R_2$, $R_4$, $R_6$ und $R_8$ die Gruppe -PO(OH)(OR) ist.

**15.** Appreturen nach Anspruch 14, dadurch gekennzeichnet, daß sie u.a. einen Katalystor enthalten.

**16.** Appreturen nach Anspruch 15, dadurch gekennzeichnet, daß der Katalysator aus Alkalimetallsalzen der unterphosphorigen Säure, phosphorigen Säure oder Hypophosphorsäure ausgewählt ist.

**17.** Appreturen nach Anspruch 14, dadurch gekennzeichnet, daß sie keinen Katalysator enthalten.

**18.** Verfahren zur Herstellung von Derivaten, wie sie in Anspruch 13 definiert sind, dadurch gekennzeichnet, daß man einen entsprechenden Ester zur gewünsschten freien Säure hydrolysiert.